# FASCICULE DE BREVET EUROPEEN

(11) **EP 1 555 839 B1**
(45) Date de publication et mention de la délivrance du brevet: **17.12.2008**
(21) Numéro de dépôt: 05290090.9
(22) Date de dépôt: 14.01.2005
(51) Int. Cl.: H04Q 7/28, H04L 25/05

(54) **Procédé de transmission de communications par actionnement d'une touche sur un téléphone et téléphone associé**
Verfahren zur Kommunikationsübertragung durch Tastendruck an einem Telefon und zugehörige Telefon
Method for transmitting communications by key press on a telephone and associated telephone

(30) Priorité: 15.01.2004 FR 0400338
(43) Date de publication de la demande: 20.07.2005
(73) Titulaire: Sagem Mobiles, 75015 Paris (FR)
(72) Inventeur: Charbonnier, Philippe, 78600 Le mesnil le Roi (FR)
(74) Mandataire: Texier, Christian

(56) Documents cités:
- EP-A- 0 321 672
- EP-A- 1 182 895
- FR-A- 2 705 517
- US-A- 5 003 576
- US-A- 5 109 525

## Description

### DOMAINE TECHNIQUE GENERAL

La présente invention concerne la téléphonie, préférentiellement mobile.

Plus précisément, elle concerne une technique de transmission de communications par actionnement - préférentiellement pression - d'une touche sur un téléphone, également appelé procédé « push-to-talk » selon la terminologie anglo-saxonne généralement utilisée par l'homme du métier.

### ETAT DE L'ART

Dans certains cas d'utilisation de terminaux de téléphonie, notamment mobile, un utilisateur peut souhaiter communiquer une information sous forme d'une phrase courte à au moins un correspondant.

C'est le cas par exemple lorsqu'au moins deux utilisateurs de terminaux se déplacent simultanément à une faible ou moyenne distance l'un de l'autre, par exemple dans les rues d'une ville, dans un supermarché pour faire des courses ou sur l'autoroute en convoi. Le court message sert alors à indiquer par exemple une position géographique courante et/ou un lieu et/ou un horaire de rendez-vous.

On comprend que ce genre de message court n'attend pas forcément une réponse, ou alors une réponse sous forme d'une phrase courte également.

Actuellement, une grande majorité des utilisateurs de terminaux communiquent ce genre d'informations par des communications téléphoniques ordinaires.

Dans la suite de la présente description, on appelle « communication téléphonique ordinaire » une communication entre deux terminaux de téléphonie, sur un canal en mode circuit.

Les développements qui suivent s'appliquent avantageusement mais non limitativement à la téléphonie mobile.

Il est aussi possible d'utiliser un canal en mode paquet (GPRS, « General Packet Radio Service ») sur lequel on fait circuler la voix par paquets (VOIP, « voice over IP ») en s'efforçant de réguler le temps d'acheminement ; ceci équivaut macroscopiquement à un canal circuit.

Dans les communications téléphoniques ordinaires, des ressources de communication sont disponibles sur le réseau pour un ensemble de terminaux abonnés. Lorsqu'un terminal veut communiquer avec un autre terminal, il demande lors de la composition du numéro une ressource pour avoir une communication bidirectionnelle entre les deux terminaux en vue de l'échange d'informations.

Des ressources de signalisation sont alors mises en oeuvre dans le réseau jusqu'à décrochage du destinataire, puis des ressources de communication. Si l'appel n'aboutit pas, une ressource de messagerie dans le réseau peut être mise en oeuvre.

On comprend que ce mode de communication n'est pas totalement satisfaisant pour la transmission de messages courts, à la fois du point de vue de l'ergonomie du terminal appelant et du point de vue de l'utilisation des ressources dans le réseau.

En effet, un appeleur A par exemple doit d'abord retrouver sur son terminal le numéro d'un correspondant B à appeler - il utilise alors éventuellement la fonction « bis » de son terminal - puis appeler son correspondant B. Si le correspondant B ne décroche pas assez rapidement, l'appeleur A doit laisser son message court sur la messagerie de B du réseau de téléphonie.

Lorsque l'appelé B finit par retrouver son téléphone et constate l'appel de A, il peut rappeler l'appeleur A. B peut alors trouver le terminal de A occupé à laisser un message sur la messagerie de B.

L'appelé B, peut éventuellement laisser à son tour un message sur la messagerie de A, mais ce message sera hors de propos, puisque l'appelé B n'a pas écouté le message de A.

L'appeleur A et l'appelé B doivent donc recommencer plusieurs fois les communications pour tomber d'accord sur un lieu de rendez-vous par exemple. Bien entendu, chaque communication occupe des ressources du réseau et est facturée, ce qui peut provoquer un coût important pour les utilisateurs.

Dans le meilleur des cas, l'appelé B ne rappelle pas immédiatement l'appeleur A et consulte sa messagerie pour écouter le message, mais il peut alors s'écouler un temps relativement long entre la communication de A vers B et la consultation du message.

Une solution selon l'état de la technique est l'utilisation d'un procédé de transmission de communications par pression d'un poussoir sur un téléphone mobile combiné avec un service de présence et de messagerie instantanée - ou un procédé « push-to-talk » (PTT) combiné avec un « Instant Message Presence Service » (IMPS) selon la terminologie anglo-saxonne généralement utilisée par l'homme du métier.

Selon le procédé connu de transmission par pression (PTT) combiné avec un service de présence et de messagerie instantanée (IMPS), au moins deux correspondants A et B se déclarent auprès d'un service de présence d'un réseau de téléphonie mobile.

Le terminal de A est configuré pour un appel vers au moins le terminal de B déclaré, et réciproquement.

Les terminaux comporte préférentiellement un poussoir dédié à ce mode de fonctionnement. Ainsi, lorsque le correspondant A par exemple appuie sur le poussoir dédié de son terminal et parle dans le microphone de son terminal, le terminal de B reproduit directement ce que dit A, et réciproquement.

Ce mode de fonctionnement utilise préférentiellement le protocole de transfert de voix sur IP (« Internet Protocol » en anglais ou Protocole Internet) ou « voice over IP » (VOIP), lui même transporté par le protocole d'accès radio par paquets GPRS.

On comprend que les terminaux déclarés forment ce que l'homme du métier appelle « une tribu », et que chaque membre de la tribu peut ainsi communiquer instantanément avec les autres membres de la tribu par simple pression du poussoir d'un téléphone mobile.

Lors de ce mode de fonctionnement, les correspondants A et B ou les membres de la tribu portent préférentiellement un écouteur mains libres ou piéton pour pouvoir écouter les messages à tout moment, sans avoir à manipuler leur terminal.

Le procédé PTT selon l'état de la technique comporte cependant des inconvénients.

Tout d'abord, le réseau de téléphonie mobile doit être adapté aux protocoles de IMPS et de VOIP. Il doit notamment comporter un serveur de présence.

Ensuite, les terminaux doivent également comporter des moyens spécifiques aptes à supporter et mettre en oeuvre les protocoles de IMPS et de VOIP.

Enfin, les membres de la tribu doivent s'abonner au service de présence et de messagerie instantanée (IMPS). De plus, il faut une volonté préméditée et simultanée des membres de la tribu de se déclarer au service IMPS pour pouvoir entendre les informations des uns des autres. Il faut notamment que chaque membre porte un écouteur mains libres en même temps que les autres membres.

FR-A-2 705 517 et US-A-5 109 525 divulguent un procédé selon le préambule de la revendication 1 et un téléphone selon le préambule de la revendication 17.

### PRESENTATION DE L'INVENTION

L'invention propose de pallier au moins un des inconvénients de l'art antérieur.

Un des buts de l'invention est de proposer une technique de transmission de communications par actionnement d'une touche - non limitativement pression d'un poussoir - sur un téléphone mobile - ou une technique « push-to-talk » (PTT) selon la terminologie anglo-saxonne généralement utilisée par l'homme du métier - qui ne nécessite pas de modification du réseau de téléphonie mobile ordinaire pour sa mise en oeuvre.

Un des autres buts de l'invention est de proposer une technique PTT sur un téléphone, notamment mobile, qui nécessite peu ou pas, pour sa mise en oeuvre, de modifications d'un terminal apte à effectuer une communication de téléphonie ordinaire.

Un des autres buts de l'invention est de proposer une technique PTT sur un téléphone, notamment mobile qui ne nécessite pas que les membres d'une tribu soient déclarés simultanément auprès d'un service de présence et/ou soient simultanément à l'écoute sur leur terminal.

A cet effet, l'invention propose un procédé selon la revendication 1.

L'invention est avantageusement complétée par les caractéristiques des revendications de procédé dépendantes.

L'invention concerne également les téléphones émetteurs de mise en oeuvre du procédé.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente schématiquement une transmission d'informations d'un téléphone mobile émetteur appartenant à un appeleur vers trois téléphones mobiles récepteurs appartenant respectivement à trois correspondants ;
- les figures 2 et 3 représentent schématiquement les moyens compris dans un exemple de téléphone émetteur selon l'invention ;
- la figure 4 représente schématiquement les moyens compris dans un exemple de téléphone récepteur ne faisant pas partie de l'invention ; et
- la figure 5 reprend schématiquement les principales étapes d'un exemple possible de procédé PTT selon l'invention.

### DESCRIPTION DETAILLEE

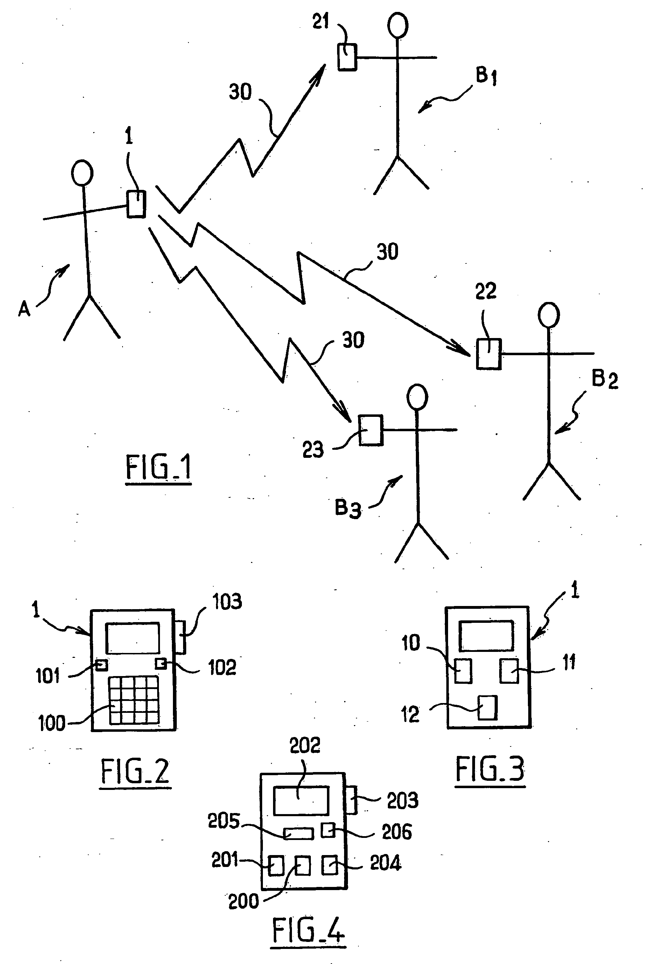

La figure 1 représente schématiquement une transmission d'informations 30 d'un téléphone mobile 1 émetteur appartenant à un appeleur A vers trois téléphones mobiles récepteurs 21, 22 et 23 appartenant respectivement à trois correspondants B1, B2 et B3.

Les informations 30 à transmettre sont avantageusement des messages vocaux courts.

Le nombre de correspondants est quelconque. L'appeleur A peut par exemple n'avoir qu'un seul correspondant privilégié, ou plus de trois. Les correspondants forment ce que l'homme du métier appelle une « tribu ».

La transmission des informations s'effectue par un procédé de transmission de communications par actionnement d'une touche sur un téléphone mobile, également appelé procédé « push-to-talk » (PTT) en anglais.

L'actionnement de la touche est préférentiellement mais non limitativement une pression d'un poussoir. C'est l'exemple que l'on prendra dans la description qui suit. L'actionnement peut également être effectué sous forme de translation d'un interrupteur par exemple.

Ainsi, le terme « touche » utilisé dans la présente description doit être entendu dans son sens le plus large, et recouvre les poussoirs, les interrupteurs, etc.

Dans un procédé selon l'invention, au moins le début des informations à transmettre est marqué par actionnement d'une touche, à savoir préférentiellement par pression d'un poussoir sur le téléphone mobile 1 émetteur. La pression du poussoir peut être prolongée et maintenue, ou courte et relâchée.

Comme le montre la figure 2, le poussoir peut par exemple être le poussoir d'acceptation 101 d'appel - classiquement la « touche verte » sur les téléphones portables - ou un poussoir supplémentaire 103 dédié au mode de fonctionnement PTT. Le poussoir dédié 103 est avantageusement situé sur un côté du téléphone 1. Le poussoir peut être également n'importe quelle touche du clavier 100.

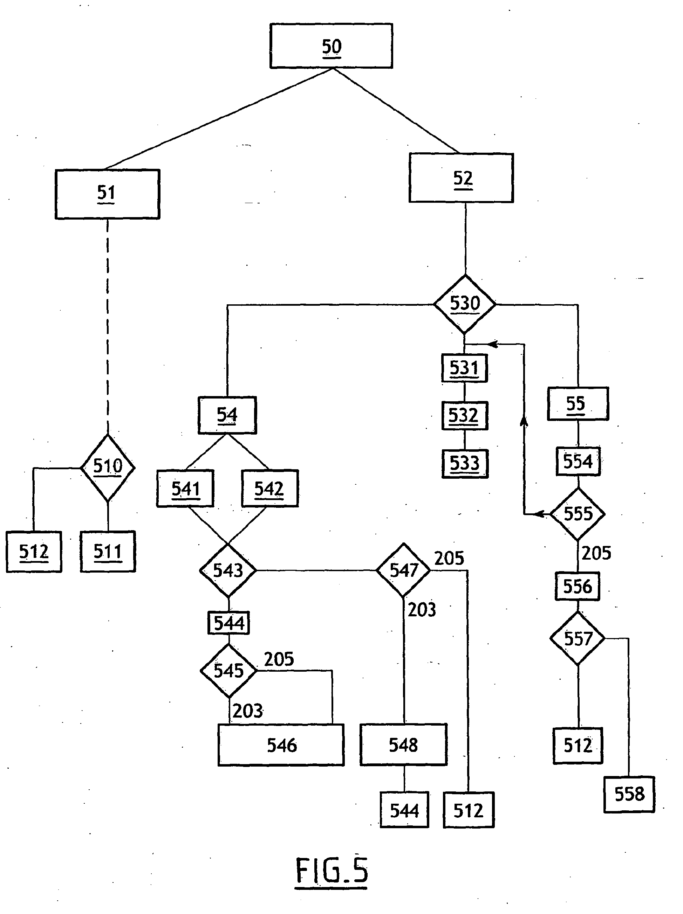

La figure 5 reprend schématiquement les principales étapes d'un exemple possible de procédé PTT selon l'invention.

Lors d'une étape 50 initiale, un appeleur A presse le poussoir 101 ou 103 et parle dans le microphone classique monté sur le téléphone 1. Il parle et prononce les informations 30, par exemple sous forme de court message vocal, qu'il veut délivrer à ses correspondants B1, B2 et B3.

La pression du poussoir 101 ou 103 engendre deux étapes 51 et 52 simultanées.

Lors de l'étape 51, le téléphone émetteur 1 enregistre, depuis leur début et sur des moyens mémoire, les informations à transmettre vers chaque téléphone récepteur 21, 22 et 23.

Selon un procédé préféré, le téléphone 1 émetteur enregistre les informations à transmettre sur des moyens mémoire 10 compris dans le téléphone émetteur 1 et visibles sur la figure 3.

La durée de l'enregistrement 51 des informations est indiquée schématiquement par les pointillés sur la figure 5. L'enregistrement dure, comme on le verra plus en détails dans la suite de la présente description, jusqu'à une étape 510.

Lors de l'étape 510, on détermine si d'une part toutes les informations ont été enregistrées, ce qui est généralement matérialisé par l'actionnement d'une touche, préférentiellement le relâchement du même poussoir ou une pression courte et relâchée ou d'une même ou autre touche - on se trouve alors dans le cas 511 - ou si d'autre part l'enregistrement est interrompu par l'établissement d'une communication directe entre l'appeleur A et au moins un de ses correspondants - on est alors dans le cas référencé par 512.

Lors de l'étape 52, le téléphone émetteur 1 appelle, simultanément à l'étape 51 d'enregistrement des informations à transmettre, au moins un téléphone récepteur 21, 22 et 23.

De façon préférée, le numéro de chaque téléphone portable récepteur 21, 22 et 23 à appeler est mémorisé par le téléphone émetteur 1, dans des moyens 11, par exemple sous forme de liste.

Le téléphone émetteur 1 appelle donc par exemple le premier téléphone récepteur 21 dans la liste de la tribu, puis les autres, successivement.

L'appel s'effectue par un appel téléphonique ordinaire à commutation de circuit. Dans le cas de plusieurs correspondants, le téléphone 1 appelle successivement chaque correspondant par des appels ordinaires, les informations 30 du message ayant été enregistrées une seule fois

Des échanges de signaux en communication établie entre le téléphone émetteur 1 et chaque téléphone récepteur 21, 22 et 23, dont on verra l'utilité et le fonctionnement plus loin, sont effectués en multifréquence à deux tonalités ou « Dual Tone MultiFrequency (DTMF) » selon la terminologie généralement utilisée par l'homme du métier.

Le téléphone 1 comporte ainsi classiquement des moyens 12 aptes à appeler successivement les correspondants et établir ou interrompre une communication ordinaire avec un correspondant, ainsi que transmettre des informations en ligne.

De façon avantageuse, le téléphone émetteur 1 appelle successivement chaque téléphone récepteur 21, 22 et 23 et enregistre les informations 30 à transmettre dès l'actionnement de la touche 101 ou la pression du poussoir 103 par exemple.

Un utilisateur A peut ajouter ou supprimer des numéros de correspondants grâce à une navigation dans un menu d'options par exemple.

Le téléphone 1 peut avoir une tribu associée à une touche, par exemple la touche 101, et une autre tribu associée à une autre touche, par exemple le poussoir 103, etc. L'appeleur A peut donc appeler des tribus différentes en actionnant des touches différentes de son téléphone 1.

Le menu des options permet à un utilisateur du téléphone 1 de modifier à volonté les tribus et leurs associations à des poussoirs.

Lors d'une étape générale 530 divisées en plusieurs étapes décrites plus en détails dans la suite de la présente description, une communication s'établit entre le téléphone émetteur 1 et successivement chaque téléphone récepteur 21, 22 et 23 ou sa messagerie sur le réseau de téléphonie mobile.

Différentes situations de mise en place de la communication peuvent se présenter.

Ainsi, on détermine à partir de l'étape 530 si le téléphone mobile du correspondant est modifié pour une mise en oeuvre avantageuse d'un procédé selon l'invention, ou s'il s'agit d'un téléphone mobile ordinaire, ou s'il se trouve face à la messagerie réseau du correspondant du fait de son inaccessibilité radio.

Pour plus de clarté, nous prendrons l'exemple d'un seul téléphone récepteur 21 comme le montre la figure 4.

Durant la phase 530, le téléphone 1 détermine si le téléphone 21 récepteur décroche, ou si c'est au contraire sa messagerie réseau qui répond.

Le cas d'une réponse par la messagerie réseau se produit quand le téléphone récepteur 21 est hors de portée radio, ou éteint, ou déjà en communication.

Ainsi, après avoir appelé le téléphone 21 lors de l'étape 52, le téléphone émetteur 1, et dès qu'il constate un décrochage de la ligne, enclenche lors de l'étape 530 les moyens 12 qui sont aptes à émettre, dès le décrochage de la ligne, un silence ou une tonalité hachée ou une tonalité synthétique.

Le téléphone 1 met également, lors de l'étape 530, immédiatement à l'écoute les moyens 12 de détection de tonalités comportant des filtres et des détecteurs de niveau.

Les moyens 12 sont aptes à effectuer la recherche simultanée de DTMF1 ou DTMF2 ou d'un bip.

Si les moyens 12 reçoivent le signal DTMF2, le téléphone 1 passe à l'étape 54 décrite plus en détails dans la suite de la présente description. Le téléphone 1 reçoit alors la confirmation que le téléphone récepteur 21 est disponible et est modifié.

Si les moyens 12 reçoivent un bip de fin d'annonce de messagerie, Le téléphone 1 reçoit alors la confirmation que le téléphone récepteur 21 est non disponible. Le téléphone 1 passe à l'étape 531.

Lors de l'étape 531, l'appel est pris par la messagerie réseau, et le téléphone 1 reconnaît le bip de fin d'annonce de messagerie grâce à l'un des filtres/détecteurs des moyens 12.

On passe alors à l'étape 532 où le téléphone 1 reproduit en ligne sur la messagerie du téléphone 21 les informations.

Le correspondants B1 consultera le message lors d'une phase ultérieure 533, lors d'un appel à sa messagerie.

Si le téléphone mobile 21 est modifié et disponible, le téléphone 1 reçoit le signal DTMF2. Le téléphone 1 passe alors à une étape référencée par 54.

Lors de l'étape 54, le téléphone récepteur 21 visible à la figure 4 établit automatiquement une communication avec le téléphone émetteur 1, dès la réception d'un signal d'appel de la part du téléphone émetteur 1.

L'établissement automatique de la communication s'effectue grâce à des moyens 200, aptes à reconnaître d'une part un appel de nature PTT, par reconnaissance de champs ad hoc dans la signalisation d'appel entrant, ou d'autre part sa provenance, à savoir l'identité de la ligne appelante, également contenue dans la signalisation d'appel entrant.

La signalisation d'appel entrant est construite par l'appelant, traité par le réseau pour acheminer l'appel, et présenté à l'appelé. Elle contient différents champs, notamment l'identité de l'appelant, mais il en contient d'autres normalisés, et on peut en normaliser de nouveaux.

Ainsi, la caractéristique ad hoc détectée par l'appelé pour décider de décrocher peut donc être: un champ spécifique dans la signalisation d'appel entrant signifiant « appel push to talk », un champ actuellement normalisé de la signalisation d'appel entrant auquel on donnerait une valeur particulière convenue (champ sous adresse ou champ « user to user signalling » selon la terminologie anglaise utilisée par l'homme du métier), et le champ identité de l'appelant.

L'intérêt d'employer un champ distinct du champ identité de l'appelant est que A peut faire des appels ordinaires vers B1 (ne nécessitant pas un décrochage automatique) ou des appels PTT (nécessitant un décrochage automatique).

Utiliser le champ identité de l'appelant a l'inconvénient de ne pas permettre cette distinction. B1 prend tous les appels de A en PTT, mais a l'avantage de marcher sur tous les réseaux. On rappelle que la grande majorité des réseaux transmettent l'identité de l'appelant, mais il est probable qu'une bonne partie des réseaux actuels ne transmette pas le champ sous adresse ou « user to user ».

On rappelle que comme suite à la reconnaissance et à l'acceptation de l'appel, des moyens 206 du téléphone 21 émettent un code de la multifréquence à deux tonalités ou un code référencé par DTMF2 en anglais à destination du téléphone émetteur 1 et lui signifiant qu'il a pris l'appel en mode PTT et qu'il est prêt à recevoir le message enregistré.

Dès que téléphone émetteur 1 détecte que la communication est établie en mode PTT- à savoir à la réception du code DTMF2 par le téléphone 1 et les moyens 12 comportant des filtres sélectifs et un détecteur de niveau - deux étapes 541 et 542 simultanées se mettent en place.

Lors de l'étape 541, le téléphone récepteur 21 enregistre les informations transmises par le téléphone émetteur 1. L'enregistrement s'effectue sur des moyens mémoire 201 visibles la figure 4.

Lors de l'étape 541, le téléphone émetteur 1 émet vers le téléphone récepteur 21 les informations enregistrées sur ses moyens 10.

L'émission des informations enregistrées par les moyens 12 du téléphone 1 s'effectue tout en continuant l'enregistrement 51 d'éventuelles informations.

L'enregistrement 51 des informations sur les moyens 10 se déroule jusqu'à ce que la fin des informations à transmettre soit marquée par l'actionnement d'une touche, préférentiellement par pression d'un poussoir 101 ou relâchement du poussoir 103 sur le téléphone mobile émetteur 1.

On rappelle que de façon très préférentielle, l'enregistrement 51 des informations débute lors d'une pression d'un poussoir dédié 103, se prolonge lors du maintien du poussoir 103 dans une position pressée, et se termine lors du relâchement du poussoir 103.

Lors de l'étape 542, s'effectuant simultanément à l'étape d'enregistrement 541, le téléphone récepteur 21 déclenche des moyens d'indication de l'appel de la part du téléphone émetteur 1, pour alerter l'utilisateur du téléphone 21.

L'indication de l'appel de la part du téléphone 1 peut s'effectuer grâce à une sonnerie émise par des moyens 204 du téléphone 21 formant haut parleur ou par une vibration par exemple, et/ou par l'affichage ou la présentation de la ligne appelante par des moyens 202 formant écran d'affichage. L'indication sonore ou vibratoire de l'appel dure quelques instants, par exemple de l'ordre d'une vingtaine de secondes. La durée de la sonnerie ou des vibrations est paramétrable par un utilisateur grâce à un menu d'options.

Dans tous les cas, on indique sur les moyens d'affichage 202 la présence d'un message en provenance du téléphone 1. L'indication sur les moyens d'affichage 202 s'effectue alors jusqu'à consultation du message par exemple par le correspondant B1.

Le correspondant B1 du téléphone peut donc répondre à cette indication de l'appel en actionnant des moyens d'écoute 203 visibles à la figure 4 et se présentant de façon préférée sous la forme d'un poussoir, situé sur le côté du téléphone par exemple. Une autre touche du clavier du téléphone ou un interrupteur est également possible pour cette fonction. On peut ainsi associer une fonction d'écoute à une touche 205, par exemple correspondant à la « touche verte » d'acceptation d'un appel.

Il peut se présenter plusieurs cas de figures en fonction du moment d'actionnement des moyens 203 ou 205 par rapport à la phase d'enregistrement 541 sur le téléphone 21.

Ainsi, lors d'une étape 543, le téléphone 21 détermine si l'actionnement des moyens 203 ou 205 a lieu pendant la phase d'enregistrement 541 des informations par le téléphone 21.

Si l'actionnement des moyens 203 ou 205 a lieu après la fin de l'enregistrement 541 des informations en provenance du téléphone 1, on passe alors à l'étape 545, via une étape 544.

En effet, la communication a été interrompue lors d'une phase 544 dès la fin de l'enregistrement 541. Le téléphone 21 l'a constaté par réception de la signalisation classique de déconnexion du réseau.

On précise ici que la communication entre le téléphone émetteur 1 et le téléphone récepteur 21 s'interrompt lorsque toutes des informations 30 enregistrées à transmettre ont été transmises vers le téléphone récepteur 21 et enregistrées par ce dernier.

Ainsi, lors de l'étape 545, on se situe dans le cas où l'ensemble des informations 30 en provenance du téléphone 1 est enregistré sur les moyens 201. L'enregistrement 541 des informations par le téléphone récepteur 21 s'est donc déroulé jusqu'à ce que la fin de la transmission des informations soit marquée par l'interruption 544 de la communication entre le téléphone émetteur 1 et le téléphone récepteur 21, c'est-à-dire lorsque toutes des informations enregistrées à transmettre ont été transmises vers le téléphone récepteur 21.

Le téléphone 21 détermine alors lors de l'étape 545 si on actionne les moyens 203 dédiés au fonctionnement PTT ou les moyens 205 d'acceptation d'appel.

Comme la communication entre le téléphone 1 et le téléphone 21 est interrompue, l'actionnement de la touche 205 produit le même effet que la l'actionnement des moyens 203.

Ainsi, lors de l'actionnement des moyens 203 ou 205, le téléphone récepteur 21 reproduit toutes les informations enregistrées lors de l'étape 546. Les moyens 204 formant haut parleur remplissent cette fonction.

Si l'actionnement des moyens 203 ou 205 a lieu lors de la phase d'enregistrement 541 des informations sur les moyens 201, plusieurs possibilités sont également envisageables. Elles sont déterminées lors de l'étape 547.

Lors de l'étape 547, le téléphone 21 détermine si le correspondant B1 actionne les moyens 203 dédiés au fonctionnement PTT ou les moyens 205 d'acceptation d'appel.

Ainsi, selon une première possibilité de mise en oeuvre d'un procédé selon l'invention, les moyens 203 sont actionnés par le correspondant B1.

On passe alors à une étape 548, durant laquelle la reproduction des informations par les moyens 204 s'effectue simultanément à l'enregistrement 541 des informations. Le correspondant B1 écoute donc les informations en léger différé.

Selon une deuxième possibilité de mise en oeuvre, les moyens 205 sont actionnés.

Selon une première variante de la deuxième possibilité, après actionnement des moyens 205, le téléphone 21 émet un code DTMF1 signifiant une demande de communication directe.

Si l'appeleur A utilisant le téléphone 1 a fini d'enregistrer les informations 30, il ne se passe rien.

Si le téléphone 1 détecte DTMF1 alors que l'utilisateur du téléphone 1 est encore en train d'enregistrer les informations, alors il stoppe l'enregistrement. Il met alors son utilisateur A en ligne avec B1.

La mise en communication directe de A et B1 s'effectue après que le téléphone 1 a émis DTMF3 signifiant l'acceptation de la communication directe. Sur détection de DTMF3, le téléphone 21 stoppe son propre enregistrement et met son propre utilisateur B1 en ligne avec A.

Selon une deuxième variante de la deuxième possibilité, après actionnement des moyens 205, le téléphone 21 émet alors DTMF1 (ou un bip) et met directement son utilisateur en ligne. Celui ci parle.

Si l'utilisateur A du téléphone 1 a fini d'enregistrer les informations, il ne se passe rien.

Si l'utilisateur A du téléphone 1 est encore en train d'enregistrer les informations, il entend le bip ou DTMF1, puis les paroles de son correspondant B1. L'appeleur A comprend que B1 veut une communication directe. L'appeleur A appuie sur une touche de communication directe sur le téléphone 1, ce qui stoppe son enregistrement et le met en ligne avec B1.

La mise en communication directe de A et B1 s'effectue après que le téléphone 1 a émis DTMF3 signifiant l'acceptation de la communication directe. Sur détection de DTMF3, le téléphone 21 stoppe son propre enregistrement.

Les deux possibilités de mise en oeuvre permettent à l'utilisateur du téléphone récepteur 21 de choisir, pendant la phase d'enregistrement 541, s'il souhaite écouter en léger différé le message reçu sur son téléphone - dans ce cas il actionne les moyens 203 - ou s'il souhaite parler directement à son interlocuteur - dans ce cas il actionne les moyens 205.

Dans les développements qui précèdent, les moyens 205 et 203 sont séparés.

Bien entendu, on peut prévoir un téléphone 21 ne comportant qu'une touche formant moyens 203 et 205. Dans ce cas, le correspondant B1 choisit si l'actionnement des moyens uniques pendant l'étape 541 engendre une écoute du message en différé ou s'il engendre l'établissement d'une communication directe avec l'appeleur A. Ce choix peut être effectué dans un menu d'options par exemple. Le choix peut également être effectué par défaut et non modifiable.

L'actionnement des moyens uniques après la fin de l'enregistrement 541 donne bien entendu lieu à la reproduction du message par le téléphone 21.

Les développements qui précèdent s'appliquent avantageusement à un téléphone 21 modifié. Dans le cas d'un téléphone modifié, le message passe en une seule communication ordinaire, voire en une succession de communications ordinaires distinctes dans le cas de plusieurs correspondants, le message étant enregistré une seule fois sur des moyens mémoire du téléphone 21.

On va maintenant décrire un procédé selon l'invention s'appliquant à partir de l'étape 530 à un téléphone mobile récepteur ordinaire. Un intérêt de l'invention est en effet de ne pas exiger de modifier tous les terminaux en même temps, donc de pouvoir introduire le service PTT progressivement.

On rappelle que lors de l'étape 530, le téléphone 1 détermine si le téléphone récepteur décroche, ou si c'est au contraire sa messagerie réseau qui répond.

Le cas d'une réponse par la messagerie réseau se produit quand le téléphone récepteur est hors de portée radio, ou éteint, ou déjà en communication.

Lors de l'étape 530, le téléphone 1 est averti du décrochage par une signalisation du réseau mais il ne sait pas qui a décroché.

Le téléphone 1 émet immédiatement en ligne un silence ou un signal haché ou synthétique qui sera décrit plus loin, et met immédiatement à l'écoute des moyens 12 de détection de tonalités comportant des filtres et des détecteurs de niveau décrits plus en détails dans la suite de la description.

Si l'appel est pris par la messagerie réseau, on passe à l'étape 531 déjà décrite ci-dessus, et le téléphone 1 reconnaît le bip de fin d'annonce de messagerie grâce à l'un des filtres/détecteur des moyens 12.

On passe alors à l'étape 532 où le téléphone 1 reproduit en ligne sur la messagerie du téléphone 21 les informations.

Le correspondant B1 consultera le message lors d'une phase ultérieure 533, lors d'un appel à sa messagerie.

Si le téléphone 21 est non modifié et n'est pas en renvoi automatique vers la messagerie, on passe à l'étape 55.

Le téléphone 21 indique donc lors d'une étape 554 l'appel de la part du téléphone 1. L'indication de l'appel se fait classiquement grâce à une sonnerie émise par des moyens du téléphone 21 formant haut parleur ou par une vibration par exemple, et/ou par l'affichage ou la présentation de la ligne appelante par des moyens 202 formant écran d'affichage.

Lors d'une étape 555, on détermine si l'utilisateur B1 du téléphone 21 récepteur ne décroche pas rapidement.

Si l'utilisateur ne décroche pas rapidement, le réseau bascule l'appel sur la messagerie. Le téléphone 1 reconnaît cette situation, grâce à ses moyens 12, par la détection du bip de fin d'annonce, et on passe alors à l'étape 531 déjà décrite ci-dessus.

Si les moyens d'acceptation d'appel - par exemple la « touche verte » 205 - sont actionnés rapidement par l'utilisateur B1 du téléphone récepteur, 21, le téléphone 21 se retrouve en ligne face au téléphone 1, qui au choix :
- reste silencieux, ou
- dans lequel des moyens 12 émettent une tonalité (par exemple à une fréquence de 1300 Hz hachée),
- ou selon une variante préférentielle, dans lequel les moyens 12 émettent en ligne une phrase synthétique expliquant la situation et demandant d'appuyer sur une touche permettant l'émission du code DTMF1 par le téléphone 1 pour poursuivre.

Lors d'une étape 556, le correspondant B1 appelé, entendant le silence, ou la tonalité hachée ou la phrase synthétique, appuie sur la touche correspondant à DTMF1.

Sur détection de DTMF1, le téléphone 1 détermine lors d'une étape 557, si son utilisateur A est encore en train d'enregistrer.

Si oui, le téléphone 1 stoppe son enregistrement et met son utilisateur A en ligne pour une conversation directe avec l'appelé B1 lors d'une étape 512.

Si au contraire l'utilisateur A appelant a cessé d'enregistrer et a rangé son téléphone, le téléphone 1 émet le message vers l'appelé B1 lors d'une étape 558.

Notons qu'on a décrit séparément le fonctionnement du téléphone émetteur appelant face à un téléphone récepteur modifié et face à un téléphone récepteur non modifié.

En fait le téléphone 1 émetteur traite avantageusement les 2 cas en même temps, sans avoir besoin d'être préconfiguré pour l'un ou l'autre.

On comprend que l'aboutissement sur messagerie réseau dans le cas du téléphone appelé modifié ou non est identique dans les deux cas, et se produit lorsque le téléphone récepteur est éteint ou hors d'atteinte radio ou occupé.

Ainsi, le téléphone émetteur 1 appelle successivement chaque correspondant, et dès qu'il constate un décrochage par un correspondant, le téléphone émetteur 1 écoute à la recherche simultanée de DTMF1 ou 2 ou bip, et émet silence ou tonalité hachée ou synthétique. S'il reçoit DTMF2 il sait que le téléphone récepteur est modifié, sinon il sait que le téléphone est non modifié.

Un procédé selon l'invention comporte de nombreux avantages.

Le téléphone émetteur de l'appeleur n'a pas besoin d'avoir tout le message pour commencer à appeler les correspondants. L'appeleur a ainsi une impression de transmission des informations en temps réel. L'appeleur prend son téléphone, appuie sur le poussoir, parle, lâche le poussoir et range son téléphone. Le téléphone émetteur effectue les phases d'enregistrement et d'appel.

Le téléphone émetteur doit être apte à reconnaître le bip de fin d'annonce de messagerie, qui n'est pas normalisé. Cependant, une reconnaissance large bande de tonalité pure mise en place dans les moyens 12 fonctionne dans la grande majorité des cas.

On rappelle que le téléphone récepteur peut être un téléphone modifié ou non. La seule exigence est que les codes DTMF1 et DTMF2 et DTMF3 soient convenus entre les téléphones émetteur et récepteur. Cette concordance est simple à mettre en place.

Un procédé selon l'invention est utile pour un appel à l'aide rapide. La personne ayant un malaise par exemple donne sa position et explique son problème sans avoir à attendre qu'un interlocuteur décroche son téléphone. De plus, on peut poursuivre en temps réel la conversation quand le correspondant décroche.

Les développements qui précèdent s'appliquent avantageusement mais non limitativement à la téléphonie mobile.

## Revendications

1. Procédé de transmission d'informations (30) d'un téléphone émetteur (1) vers au moins un téléphone récepteur (21, 22, 23), le début des informations (30) à transmettre étant marqué par actionnement d'une touche (103, 105) sur le téléphone émetteur (1), comportant les étapes selon lesquelles :
- le téléphone émetteur (1) enregistre, depuis leur début et sur des moyens (10) mémoire, les informations (30) à transmettre vers chaque téléphone récepteur (21, 22, 23) ;
- le téléphone émetteur (1) appelle, simultanément à l'étape d'enregistrement (51), au moins un téléphone récepteur ;
- une communication s'établit entre le téléphone émetteur (1) et le téléphone récepteur (21, 22, 23) ou sa messagerie; et
- le téléphone émetteur (1) émet vers le téléphone récepteur (21, 22, 23) ou sa messagerie les informations (30) enregistrées, tout en continuant l'enregistrement (541) d'éventuelles informations,
**caractérisé en ce que**
la communication entre le téléphone émetteur et chaque téléphone récepteur est une communication sur un canal en mode circuit, le téléphone émetteur (1) appelant successivement chaque téléphone récepteur (21, 22, 23).

2. Procédé selon la revendication 1, **caractérisé en ce que** la communication entre le téléphone émetteur (1) et chaque téléphone récepteur (21, 22, 23) s'interrompt lorsque toutes des informations enregistrées (30) à transmettre ont été transmises vers chaque téléphone récepteur (21, 22, 23).

3. Procédé selon l'une des revendications 1 ou 2, **caractérisé en ce qu'**au moins un téléphone récepteur (21, 22, 23) établit une communication avec le téléphone émetteur (1) lors de l'actionnement de moyens d'acceptation d'appel (205) de la part du téléphone émetteur (1).

4. Procédé selon l'une des revendications 1 à 3, **caractérisé en ce que** la messagerie d'au moins un téléphone récepteur (21, 22, 23) établit une communication avec le téléphone émetteur (1).

5. Procédé selon l'une des revendications 1 ou 2, **caractérisé en ce qu'**il comporte les étapes selon lesquelles :
- au moins un téléphone récepteur (21, 22, 23) établit la communication avec le téléphone émetteur (1) automatiquement dès la réception du signal d'appel de la part du téléphone émetteur (1) ;
- le téléphone récepteur (21, 22, 23) enregistre les informations transmises (30) par le téléphone émetteur (1) sur des moyens mémoire (201) ; et
- le téléphone récepteur (21, 22, 23) déclenche des moyens (204, 202) d'indication de l'appel du téléphone émetteur, simultanément à l'étape d'enregistrement (541).

6. Procédé selon la revendication 5, **caractérisé en ce que** l'enregistrement (541) des informations par le téléphone récepteur se déroule jusqu'à ce que la fin de la transmission (511) des informations (30) soit marquée par l'interruption de la communication entre le téléphone émetteur et le téléphone récepteur, lorsque toutes des informations enregistrées (30) à transmettre ont été transmises vers le téléphone récepteur.

7. Procédé selon l'une des revendications 5 ou 6, **caractérisé en ce que** le téléphone récepteur (21, 22, 23) reproduit toutes les informations enregistrées (30) lors de l'actionnement de moyens d'écoute (203, 205) sur le téléphone récepteur.

8. Procédé selon la revendication 7, **caractérisé en ce que** la reproduction (548) des informations s'effectue simultanément à l'enregistrement (541) des informations (30).

9. Procédé selon la revendication 5, **caractérisé en ce que** l'enregistrement (541) des informations par le téléphone récepteur se déroule jusqu'à l'actionnement de moyens d'acceptation (205) d'appel du téléphone récepteur, une communication directe (512) s'établissant alors entre le téléphone émetteur (1) et le téléphone récepteur (21, 22, 23).

10. Procédé selon l'une des revendications 1 à 9, **caractérisé en ce que** le téléphone émetteur (1) enregistre (51) les informations (30) à transmettre dès l'actionnement du poussoir (103, 101) sur le téléphone émetteur.

11. Procédé selon l'une des revendications 1 à 10, **caractérisé en ce que** le numéro de chaque téléphone récepteur (21, 22, 23) à appeler est mémorisé dans le téléphone émetteur (1).

12. Procédé selon l'une des revendications 1 à 11, **caractérisé en ce que** le téléphone récepteur (21, 22, 23) reconnaît la nature de la communication entrante par une caractéristique convenue dans la signalisation d'appel, ou par le biais de l'identité de l'appelant, également véhiculée dans la signalisation d'appel entrant.

13. Procédé selon l'une des revendications 1 à 12, **caractérisé en ce que** les échanges de signalisation entre le téléphone émetteur (1) et chaque téléphone récepteur (21, 22, 23) sont effectués en multifréquence à deux tonalités.

14. Procédé selon l'une des revendications 1 à 13, **caractérisé en ce que** le téléphone émetteur (21, 22, 23) enregistre les informations (30) à transmettre sur des moyens mémoire compris dans le téléphone émetteur (1).

15. Procédé selon l'une des revendications 1 à 14, **caractérisé en ce que** l'enregistrement (541) se déroulant jusqu'à ce que la fin des informations (30) à transmettre soit marquée par actionnement d'un poussoir sur le téléphone émetteur.

16. Procédé selon l'une des revendications 1 à 15, **caractérisé en ce que** le téléphone émetteur et/ou au moins un téléphone récepteur (21, 22, 23) est un téléphone mobile.

17. Téléphone émetteur (1) apte à effectuer une transmission d'informations (30) vers au moins un téléphone récepteur (21, 22, 23), comportant une touche (101, 103) permettant de marquer par actionnement le début des informations (30) à transmettre, comportant des moyens aptes à :
- enregistrer sur des moyens mémoire (10), depuis leur début, les informations (30) à transmettre vers chaque téléphone récepteur (21, 22, 23) ;
- appeler (12), simultanément à l'étape (51) d'enregistrement, au moins un téléphone récepteur (21, 22, 23);
- établir (12) une communication avec le téléphone récepteur ou sa messagerie ; et
- émettre (12) vers le téléphone récepteur (21, 22, 23) ou sa messagerie les informations enregistrées, tout en continuant l'enregistrement (51) d'éventuelles informations (30),
**caractérisé en ce que**
il comporte des moyens (12) aptes à établir la communication entre le téléphone émetteur et chaque téléphone récepteur sur un canal en mode circuit , lesdits moyens étant aptes à appeler successivement chaque téléphone récepteur.

18. Téléphone selon la revendication 17, **caractérisé en ce qu'**il comporte des moyens (12) aptes à interrompre (544) la communication avec chaque téléphone (21, 22, 23) récepteur lorsque toutes des informations enregistrées à transmettre ont été transmises.

19. Téléphone selon l'une des revendications 17 ou 18, **caractérisé en ce qu'**il comporte des moyens aptes à appeler chaque téléphone récepteur (21, 22, 23) et à enregistrer les informations à transmettre dès l'actionnement de la touche (101, 103).

20. Téléphone selon l'une des revendications 17 à 19, **caractérisé en ce que** la touche est un poussoir (103) dédié à la transmission des informations à transmettre.

21. Téléphone selon l'une des revendications 17 à 20, **caractérisé en ce qu'**il est un téléphone mobile.

## Claims

1. A method for transmitting information (30) from one transmitting telephone (1) to at least one receiving telephone (21, 22, 23), the beginning of the information (30) to be transmitted being marked by actuating a key (103, 105) on the transmitting telephone (1), including the steps according to which:
- the transmitting telephone (1) records the information (30) to be transmitted to each receiving telephone (21, 22, 23), from its beginning and on memory means (10);
- the transmitting telephone (1) simultaneously with the recording step (51) calls at least one receiving telephone;
- communication is established between the transmitting telephone (1) and the receiving telephone (21, 22, 23) or its messaging system; and
- the transmitting telephone (1) transmits recorded information (30) to the receiving telephone (21, 22, 23) or its messaging system, while continuing the recording (541) of possible information,
**characterized in that**
the communication between the transmitting telephone and each receiving telephone is a communication over a channel in circuit mode, the transmitting telephone (1) successively calling each receiving telephone (21, 22, 23).

2. The method according to claim 1, **characterized in that** the communication between the transmitting telephone (1) and each receiving telephone (21, 22, 23) is interrupted when all the recorded information (30) to be transmitted has been transmitted to each receiving telephone (21, 22, 23).

3. The method according to any of claims 1 or 2, **characterized in that** at least one receiving telephone (21, 22, 23) establishes a communication with the transmitting telephone (1) upon actuation of call acceptance means (205) from the transmitting telephone (1).

4. The method according any of claims 1 to 3, **characterized in that** the messaging system of at least one receiving telephone (21, 22, 23) establishes a communication with the transmitting telephone (1).

5. The method according any of claims 1 or 2, **characterized in that** it includes the steps according to which:
- at least one receiving telephone (21, 22, 23) establishes the communication with the transmitting telephone (1) automatically upon receiving the call signal from the transmitting telephone (1);
- the receiving telephone (21, 22, 23) records the information (30) transmitted by the transmitting telephone (1) on memory means (201); and
- the receiving telephone (21, 22, 23) triggers means (204, 202) for indicating the call from the transmitting telephone, simultaneously with the recording step (541).

6. The method according to claim 5, **characterized in that** the recording (541) of the information by the receiving telephone takes place until the end of the transmission (511) of the information (30) is marked by the interruption of the communication between the transmitting telephone and the receiving telephone, when the whole of the recorded information (30) to be transmitted has been transmitted to the receiving telephone.

7. The method according to any of claims 5 or 6, **characterized in that** the receiving telephone (21, 22, 23) reproduces the whole of the recorded information (30) upon actuation of listening means (203, 205) on the receiving telephone.

8. The method according to claim 7, **characterized in that** the reproduction (548) of the information is carried out simultaneously with the recording (541) of the information (30).

9. The method according to claim 5, **characterized in that** the recording (541) of the information by the receiving telephone takes place until the call acceptance means (205) of the receiving telephone are actuated, a direct communication (512) being then established between the transmitting telephone (1) and the receiving telephone (21, 22, 23).

10. The method according to any of claims 1 to 9, **characterized in that** the transmitting telephone (1) records (51) the information (30) to be transmitted as soon as the push-button (103, 101) is actuated on the transmitting telephone.

11. The method according to any of claims 1 to 10, **characterized in that** the number of each receiving telephone (21, 22, 23) to be called is stored in memory in the transmitting telephone (1).

12. The method according to any of claims 1 to 11, **characterized in that** the receiving telephone (21, 22, 23) recognizes the nature of the incoming communication by an agreed characteristic in the call signalling, or by means of the identity of the caller, also conveyed in the incoming call signalling.

13. The method according to any of claims 1 to 12, **characterized in that** the signalling exchanges between the transmitting telephone (1) and each receiving telephone (21, 22, 23) are carried out in a two-tone multifrequency mode.

14. The method according to any of claims 1 to 13, **characterized in that** the transmitting telephone (21, 22, 23) records the information (30) to be transmitted on memory means comprised in the transmitting telephone (1).

15. The method according to any of claims 1 to 14, **characterized in that** the recording (541) taking place until the end of the information (30) to be transmitted, is marked by actuation of a push-button on the transmitting telephone.

16. The method according to any of claims 1 to 15, **characterized in that** the transmitting telephone and/or at least one receiving telephone (21, 22, 23) is a mobile telephone.

17. A transmitting telephone (1) capable of carrying out transmission of information (30) to at least one receiving telephone (21, 22, 23), including a key (101, 103) by actuation of which the beginning of the information (30) to be transmitted may be marked, including means capable of:
- recording on memory means (10), from its beginning, information (30) to be transmitted to each receiving telephone (21, 22, 23);
- simultaneously with the recording step (51), calling at least one receiving telephone (21, 22, 23);
- establishing (12) a communication with the receiving telephone or its messaging system; and
- transmitting (12) the recorded information to the receiving telephone (21, 22, 23) or its messaging system, while continuing the recording (51) of possible information (30),
**characterized in that**
it includes means (12) capable of establishing the communication between the transmitting telephone and each receiving telephone over a channel in circuit mode, said means being capable of successively calling each receiving telephone.

18. The telephone according to claim 17, **characterized in that** it includes means (12) capable of interrupting (544) the communication with each receiving telephone (21, 22, 23) when the whole of the recorded information to be transmitted has been transmitted.

19. The telephone according to any of claims 17 or 18, **characterized in that** it includes means capable of calling each receiving telephone (21, 22, 23) and of recording the information to be transmitted as soon as the key (101, 103) is actuated.

20. The telephone according to any of claims 17 to 19, **characterized in that** the key is a push-button (103) dedicated to the transmission of the information to be transmitted.

21. The telephone according to any of claims 17 to 20, **characterized in that** it is mobile telephone.

## Patentansprüche

1. Verfahren zur Übertragung von Informationen (30) von einem Sendertelefon, (1) zu wenigstens einem Empfängertelefon (21, 22, 23), wobei der Beginn der zu übertragenden Informationen (30) durch Betätigung einer Taste (103, 105) am Sendertelefon (1) markiert ist, mit folgenden Verfahrensschritten:
- das Sendertelefon (1) speichert seit ihrem Beginn und auf Speichermittel (21, 22, 23), die zu jedem Empfängertelefon (21, 22, 23) zu übertragenden Informationen (30) ab;
- gleichzeitig zum Abspeicherungsschritt (51), ruft das Sendertelefon (1) mindestens ein Empfängertelefon an;
- es wird zwischen dem Sendertelefon (1) und dem Empfängertelefon (21, 22, 23) oder dessen Anrufbeantworter eine Kommunikation aufgebaut; und
- das Sendertelefon (1) sendet zum Empfängertelefon (21, 22, 23) oder dessen Anrufbeantworter die abgespeicherten Informationen (30), während dessen es weiter mit der Abspeicherung (541) eventueller Informationen fortführt,
**dadurch gekennzeichnet, dass**
die Kommunikation zwischen dem Sendertelefon und jedem Empfängertelefon eine Kommunikation auf einem Kanal im Leitungsmodus ist, wobei das Sendertelefon (1) nacheinander jedes Empfängertelefon (21, 22, 23) anruft.

2. Verfahren nach Anspruch 1, **dadurch gekennzeichnet, dass** die Kommunikation zwischen dem Sendertelefon (1) und jedem Empfängertelefon (21, 22, 23) unterbrochen wird, sobald die gesamten abgespeicherten zu übertragenden Informationen (30) zu jedem Empfängertelefon (21, 22, 23) übertragen worden sind.

3. Verfahren nach einem der Ansprüche 1 oder 2, **dadurch gekennzeichnet, dass** bei Betätigung von Anrufsannahmemitteln (205) seitens des Sendertelefons (1), mindestens ein Empfängertelefon (21, 22, 23) mit dem Sendertelefon (1) eine Kommunikation aufbaut.

4. Verfahren nach einem der Ansprüche 1 bis 3, **dadurch gekennzeichnet, dass** der Anrufbeantworter mindestens eines Empfängertelefons (21, 22, 23) mit dem Sendertelefon (1) eine Kommunikation aufbaut.

5. Verfahren nach einem der Ansprüche 1 oder 2, **dadurch gekennzeichnet, dass** es folgende Schritte umfasst :
- mindestens ein Empfängertelefon (21, 22, 23) baut automatisch beim Empfang des Anrufssignals seitens des Sendertelefons (1) mit dem Sendertelefon (1) eine Kommunikation auf;
- das Empfängertelefon (21, 22, 23) speichert die vom Sendertelefon (1) übertragenen Informationen (30) auf Speichermittel (201) ab; und
- das Empfängertelefon (21, 22, 23) löst gleichzeitig zum Abspeicherungsschritt (541) Anzeigemittel (204, 202) des Anrufs des Sendertelefons aus.

6. Verfahren nach Anspruch 5, **dadurch gekennzeichnet, dass** die Abspeicherung (541) der Informationen durch das Empfängertelefon solange erfolgt, bis das Ende der Übertragung (511) der Informationen (30) durch die Unterbrechung der Kommunikation zwischen dem Sendertelefon und dem Empfängertelefon markiert wird, wenn die gesamten abgespeicherten, zu übertragenden Informationen (30) zum Empfängertelefon übertragen worden sind.

7. Verfahren nach einem der Ansprüche 5 oder 6, **dadurch gekennzeichnet, dass** das Empfängertelefon (21, 22, 23) bei Betätigung von Abhörmitteln (203, 205) auf dem Empfängertelefon, die gesamten abgespeicherten Informationen (30) wiedergibt.

8. Verfahren nach Anspruch 7, **dadurch gekennzeichnet, dass** die Wiedergabe (548) der Informationen gleichzeitig zur Abspeicherung (541) der Informationen (30) erfolgt.

9. Verfahren nach Anspruch 5, **dadurch gekennzeichnet, dass** die Abspeicherung (541) der Informationen durch das Empfängertelefon bis zur Betätigung von Anrufsannahmemitteln (205) des Empfängertelefons erfolgt, wobei sich eine direkte Kommunikation (512) zwischen dem Sendertelefon (1) und dem Empfängertelefon (21, 22, 23) aufbaut.

10. Verfahren nach einem der Ansprüche 1 bis 9, **dadurch gekennzeichnet, dass** das Sendertelefon (1) die zu übertragenen Informationen (30) sofort bei Betätigung des Druckknopfes (103, 101) auf dem Sendertelefon abspeichert.

11. Verfahren nach einem der Ansprüche 1 bis 10, **dadurch gekennzeichnet, dass** die Nummer eines jeden anzurufenden Empfängertelefons (21, 22, 23) im Sendertelefon (1) abgelegt wird.

12. Verfahren nach einem der Ansprüche 1 bis 11, **dadurch gekennzeichnet, dass** das Empfängertelefon (21, 22, 23) die Art der ankommenden Kommunikation durch ein vorbestimmtes Merkmal in dem Anrufsignal oder über die Identität des Anrufers erkennt, die ebenfalls in dem Anrufsignal mitgeführt wird.

13. Verfahren nach einem der Ansprüche 1 bis 12, **dadurch gekennzeichnet, dass** die Signalaustausche zwischen dem Sendertelefon (1) und jedem Empfängertelefon (21, 22, 23) in Mehrfrequenz mit zwei Tönen erfolgen.

14. Verfahren nach einem der Ansprüche 1 bis 13, **dadurch gekennzeichnet, dass** das Empfängertelefon (21, 22, 23) die zu übertragenden Informationen (30) auf Speichermittel abspeichert, die im Sendertelefon (1) einbegriffen sind.

15. Verfahren nach einem der Ansprüche 1 bis 14, **dadurch gekennzeichnet, dass** die Abspeicherung (541) solange erfolgt, bis das Ende der zu übertragenden Informationen (30) durch die Betätigung eines Druckknopfes auf dem Sendertelefon markiert wird.

16. Verfahren nach einem der Ansprüche 1 bis 15, **dadurch gekennzeichnet, dass** das Sendertelefon und/oder mindestens ein Empfängertelefon (21, 22, 23) ein Mobiltelefon ist.

17. Sendertelefon (1) das in der Lage ist, Informationen (30) zu mindestens ein Empfängertelefon (21, 22, 23) zu übertragen, dass eine Taste aufweist die es ermöglicht, durch Betätigung den Beginn der zu übertragenden Informationen (30) zu markieren, das Mittel umfasst, die in der Lage sind
- seit ihrem Beginn, die zu jedem Empfängertelefon (21, 22, 23) zu übertragenden Informationen (30) auf Speichermittel (10) abzuspeichern;
- gleichzeitig zum Abspeicherungsschritt (51), mindestens ein Empfängertelefon (21, 22, 23) anzurufen (12);
- mit dem Empfängertelefon oder dessen Anrufbeantworter eine Kommunikation aufzubauen (12), und
- zum Empfängertelefon (21, 22, 23) oder seinem Anrufbeantworter die abgespeicherten Informationen zu senden (12), und dabei die Abspeicherung (51) eventueller Informationen (30) fortzuführen,
**dadurch gekennzeichnet, dass**
es Mittel (12) umfasst, die in der Lage sind, zwischen dem Sendertelefon und jedem Empfängertelefon eine Kommunikation auf einem Kanal im Leitungsmodus aufzubauen, wobei die genannten Mittel in der Lage sind jedes Empfängertelefon nacheinander anzurufen.

18. Telefon nach Anspruch 17, **dadurch gekennzeichnet, dass** es Mittel (12) aufweist, die in der Lage sind, die Kommunikation mit jedem Empfängertelefon (21, 22, 23) zu unterbrechen (544) sobald die gesamten abgespeicherten zu übertragenden Informationen übertragen worden sind.

19. Telefon nach einem der Ansprüche 17 oder 18, **dadurch gekennzeichnet, dass** es Mittel aufweist, die in der Lage sind, jedes Empfängertelefon (21, 22, 23) anzurufen und die zu übertragenden Informationen abzuspeichern, sobald die Taste (101, 103) betätigt wird.

20. Verfahren nach einem der Ansprüche 17 bis 19, **dadurch gekennzeichnet, dass** die Taste eine Drucktaste (103) ist, die der Übertragung der zu übertragenden Informationen gewidmet ist.

21. Telefon nach einem der Ansprüche 17 bis 20, **dadurch gekennzeichnet**, das es ein Mobiltelefon ist.
